# EUROPEAN PATENT APPLICATION

(11) **EP 3 503 140 A1**
(43) Date of publication of application: **26.06.2019**
(21) Application number: 17210200.6
(22) Date of filing: 22.12.2017
(51) Int. Cl.: H01F 41/02, H01F 1/08, H02K 15/03, H01F 7/02

(54) **SINTERED MAGNETIC BODY, MAGNET, ELECTRICAL MACHINE, WIND TURBINE AND METHOD FOR MANUFACTURING A SINTERED MAGNETIC BODY**

(71) Applicant: Siemens Gamesa Renewable Energy A/S, 7330 Brande (DK)
(72) Inventor: AZAR, Ziad, S10 4ED Sheffield (GB); DUKE, Alexander, S6 5AG Sheffield (GB); THOMAS, Arwyn, Cheadle Hulme, SK8 6HW Cheshire (GB); CLARK, Richard, S35 0AF Worrall Sheffield (GB); URDA, Adriana Christina, 2300 København S. (DK)
(74) Representative: Aspacher, Karl-Georg

(57) **Abstract**

A sintered magnetic body (100) comprising grains (110), each grain (110) having a preferred axis of magnetization (112), wherein in at least one cross-sectional plane (CS, CS') of the sintered magnetic body (100) a majority of said grains (110) are oriented such that their preferred axis of magnetization (112) is pointing to a focal area (F, F') outside of the sintered magnetic body (100).

The sintered magnetic body has the advantage that a magnetic field strength on the side of the focal area of the sintered magnetic body or a magnetic flux density in a certain area is enhanced compared to a sintered magnetic body having a purely parallel magnetization pattern. This can be used to increase the efficiency of electrical machines.

## Description

The present invention relates to a sintered magnetic body, a magnet, an electrical machine comprising a magnet, a wind turbine and a method for manufacturing the sintered magnetic body. Sintered magnetic bodies can be magnetized and used as magnets in various applications. One is the use of such magnets in generators or electric motors.

Electrical machines such as generators and motors usually comprise a stator and a rotor. In a generator, the rotor is rotated by an external momentum and an electric voltage is induced and a current will flow if connected to a circuit i.e. load or grid. In a motor, an electric current is provided to either the rotor or the stator, resulting in a momentum acting on the rotor thus driving the rotor to rotate.

In permanent magnet electrical machines, permanent magnets are used for providing an excitation field. The permanent magnets may be arranged on either the stator or the rotor, while coils are arranged on the rotor or stator, respectively. When the rotor rotates relative to the stator, a temporally changing magnetic flux is generated in a coil by a permanent magnet passing the coil. This results in induction of an electric voltage driving a current in the windings of the coil if connected to a circuit. The higher rate of change in magnetic flux through the coil, the larger is the current induced. It is therefore generally desirable to maximise the magnetic flux between the permanent magnet and the coil.

The magnetic flux can be increased by using stronger magnets, e.g. having a higher energy product or higher remanence, or thicker magnets to increase the working point for a given air-gap, which is usually very cost-intensive, since the magnets are the most expensive component material by weight of such machines, and large electrical machines typically need several hundreds of individual magnets. By reducing the air-gap between the magnet and the coil, the magnetic flux may also be increased, however this is challenging due to mechanical constraints and manufacturing tolerances. By enhancing the cooling of the magnets in the working machine for keeping the magnets at a lower temperature, which keeps the magnetic field strength of the magnets higher, the magnetic flux can also be kept higher. However, this increases the cooling load of the machine, thus reducing the overall system efficiency.

It is one object of the present invention to provide an enhanced sintered magnetic body, in particular for use in an electrical machine and/or a generator for a turbine.

According to a first aspect, a sintered magnetic body comprising grains is suggested. Each grain has a preferred axis of magnetization, wherein in at least one cross-sectional plane of the sintered magnetic body a majority of said grains are oriented such that their preferred axis of magnetization is pointing to a focal area outside of the sintered magnetic body.

The sintered magnetic body has the advantage that a magnetic field strength on the side of the focal area of the sintered magnetic body or a magnetic flux density in a certain area is enhanced compared to a sintered magnetic body having a random magnetization pattern or even a parallel magnetization pattern. In particular, magnetic field lines representing the magnetic field of the sintered magnetic body are concentrated in a smaller area and have a higher density in at least a part of the surface of the sintered magnetic body on the side of the focal area compared to the parallel magnetization case. It can be said that the magnetic field lines in the sintered magnetic body converge towards the focal area.

In effect, the magnetic field pattern of the sintered magnetic body is similar to a parallel magnetized magnetic body with a higher thickness and/or a stronger magnetization. Thus, the sintered magnetic body achieves a given magnetic field strength at a lower cost. Compared with a parallel magnetized body, less material is needed, and the material can be of a lower grade, because a lower magnetization reaches similar magnetic field strengths at the surface facing the focal area.

The sintered magnetic body comprises grains of a magnetic and/or magnetizable material. An example for such material is an alloy of neodymium, iron and boron (Nd-Fe-B). For example, a grain is a crystalline region having one crystal structure within the sintered magnetic body. A grain can comprise one or several magnetic domains. A magnetic domain can be defined as a subset of particles forming the grain, which have a preferred magnetic momentum. The magnetic momentum of a particle can be described by a vector having a direction and a magnitude. The sum of the magnetic momenta of the particles in the magnetic domain form a magnetic field vector associated with the magnetic domain. The sum of the magnetic field vectors of all domains of a grain yield a magnetic field vector associated with the grain.

For example, a grain comprises three magnetic domains, wherein the magnetic field vectors of two domains are parallel with each other and the third is antiparallel to them, all three having the same magnitude. Then, the grain has a net or resulting magnetic field which can be described by a magnetic field vector given as the sum of the three magnetic field vectors. The magnetic field vector of the grain in this example will be parallel to the magnetic field vectors of the two domains with the parallel magnetic field vectors. It is pointed out that local effects are neglected in this example.

The preferred axis of magnetization of a grain is in particular given by the direction of the magnetic field vector associated with the grain.

The preferred axis of magnetization has the effect, for example, that a grain that is free to rotate and is placed in an external magnetic field, will arrange or orient itself parallel to the external magnetic field. This means that the preferred axis of magnetization will be parallel to a local magnetic field vector of the external magnetic field at the position of the grain. For example, for a sintered magnetic body comprising grains of NdFeB, which is an anisotropic material, the grains have a preferred alignment which is imprinted to the sintered magnetic body by the external magnetic field that is applied during forming of the sintered magnetic body from the granular raw material. The external magnetic field can also be called pre-magnetizing field.
In the cross-sectional plane, a majority of grains have their preferred axis of magnetization parallel or essentially parallel to that plane. This means that an angle between the preferred axis of magnetization of a grain and the plane is less than 10°.

For example, a majority of grains means that a resulting magnetic field vector obtained by adding the individual magnetic field vectors associated with each of the grains is pointing towards the focal area. Therefore, the majority is not necessarily a number majority.

However, a majority would be present also when every other or 50% of the grains are oriented towards the focal area.

The majority of grains furthermore are oriented such that their preferred axis of magnetization is oriented to a focal area outside of the sintered magnetic body. In particular, the focal area lies in the cross-sectional plane. It can be said that the grains' preferred axis of magnetization is focussed towards the focal area. Preferably, the preferred axis of magnetization of each of the grains in the plane is parallel to plane, but a pair is not necessarily parallel to each other. For example, the preferred axis of magnetization of two grains adjacent to each other include an angle of over 0° and preferably of about 0.1° - 25°. This orientation of the grains in the plane can be denoted as a focussed magnetization pattern.

The sintered magnetic body preferably has the focused magnetization pattern not only in one cross-sectional plane, but in several cross-sectional planes which are adjacent and parallel to each other. For example, the sintered magnetic body is a cuboid that is elongated between a first end face and a second end face in a first direction and has a width in a second direction and a height in a third direction. For example, the focused magnetization pattern is given in a central cross-sectional plane that is perpendicular to the first direction. The focal area is arranged, for example, outside of the sintered magnetic body in the third direction. Preferably, the focussed magnetization pattern is given in an elongated section of the elongated sintered magnetic body around the central part, such that a plurality of cross-sectional planes that fulfil the criteria exist. Each cross-sectional plane can have its own focal area. The plurality of focal areas preferably form an elongated cylinder elongated in the first direction.

In cross-sectional planes close to the first end face or the second end face of the elongated sintered magnetic body, boundary effects may have an impact on the magnetization pattern.

The sintered magnetic body with the focussed magnetization pattern has the advantage that a magnetic field strength at the side facing towards the focal area is larger than that of a sintered magnetic body with a parallel magnetization pattern. Here, parallel magnetization pattern means that the preferred axis of magnetization of grains are oriented essentially parallel to each other. Furthermore, the magnetic flux is concentrated in a smaller surface area of the sintered magnetic body, leading to an increase of the magnetic flux density in that area. In particular, the magnetic flux density through an area at a distance from the sintered magnetic body in the direction of the focal area is also increased by this effect.

The sintered magnetic body may be employed advantageously in an electrical machine, such as an electric motor or an electric generator. In such electrical machine, the sintered magnetic body has the advantage that the magnetic flux density in an airgap between a rotor and a stator of the electrical machine is increased, which can yield a higher torque at a given electric current in an electric motor or a higher induced electric voltage at a given momentum in an electric generator. Thus, the efficiency of the electrical machine equipped with the sintered magnetic body can be increased. This can be achieved without increasing manufacturing costs for the magnets employed in the electrical machine.

According to an embodiment of the sintered magnetic body, a magnetic field strength of a magnetic field of the sintered magnetic body at a first surface of the sintered magnetic body facing towards the focal area is increased in at least a part of the area of the first surface with respect to the magnetic field strength of the magnetic field at a second surface of the sintered magnetic body distal of the focal area.

According to a further embodiment of the sintered magnetic body, a magnetic flux generated by the magnetic field of the sintered magnetic body through an area with a predefined shape at a predefined distance to the first surface outside of the sintered magnetic body is larger than the magnetic flux through an area with the predefined shape at the predefined distance to the second surface distal to the focal area.

According to further embodiment of the sintered magnetic body, an orientation pattern of grains in a parallel plane to the cross-sectional plane is same or similar to the orientation pattern of the grains in the cross-sectional plane.

The magnetization pattern in different parallel cross-sectional planes may be slightly different. However, the general concept of having a focussed magnetization pattern will be fulfilled.

According to a further embodiment of the sintered magnetic body, an angle between a straight path in the cross-sectional plane along the first surface and the preferred axis of magnetization of grains is between 0° - 90°, wherein at a center portion of the sintered magnetic body along the straight path the angle is in the range of 80°- 90°.

For example, the sintered magnetic body is the elongated cuboid as defined above. The straight path then runs along the width of the sintered magnetic body. At a first edge of the sintered magnetic body, the angle between the straight path and the preferred axis of magnetization of the grain at the first edge is, for example, 45°. Following the straight path towards the center along the width, the angle gradually decreases and reaches 0° at the center. Following the straight path towards the second edge of the sintered magnetic body, the angle continues to change gradually in the same direction. At the second edge, the angle reaches a value of about 45°. An angle between the preferred axis of magnetization of the grain at the first edge and the grain at the second edge thus has a value of 45°+45°=90°.

According to a further embodiment of the sintered magnetic body, an angle between the preferred axis of magnetization of two adjacent grains is larger than 0° and less than 25°.

In this embodiment the grains are oriented such that the preferred axis of magnetization of adjacent grains is generally pointing in the same direction, which implies that their magnetic field vectors have large parallel components. Therefore, the magnetic field is enhanced in this direction. At the same time, the grains are not oriented with their preferred axis of magnetization fully parallel, but with an inclination angle which leads to a narrowing of the magnetic field lines and an enhanced magnetic flux density. This is in contrast to a magnet having a parallel magnetization pattern, wherein the preferred axis of magnetization preferably is parallel for all the grains.

According to further embodiment of the sintered magnetic body it has at least one geometric symmetry plane.

According to a further embodiment of the sintered magnetic body it has a cuboidal shape, a square frustum shape, a bread loaf or a parallelepiped-shape.

In further embodiments, the sintered magnetic body may be derived from one of the mentioned forms by bending the respective form about a specific axis. The resulting form can be described as a curved cuboid, for example.

According to further embodiment of the sintered magnetic body it has a thickness measured from the first surface to the second surface is between 0.5 cm and 4 cm, preferably between 1 cm and 3cm, and more preferred between 1.5 cm and 2.5 cm.

For example, the thickness is smallest dimension of the sintered magnetic body. For example, the sintered magnetic body is an elongated cuboid and has a width that is of the order of 2 - 10 times the thickness and has a length that is of the order of 0.5 - 5 times the width and preferably 0.5 - 2 times the width. The cross-sectional plane is in particular perpendicular to the length-direction and parallel to the thickness-direction and the width-direction. This means that the cross-sectional area of the sintered magnetic body is minimized.

According to a further embodiment of the sintered magnetic body, the focal area is located at a distance of less than 20 cm, preferably less than 10 cm, and more preferred less than 8 cm from the first surface.

The closer the focal area, the stronger the concentration effect of the sintered magnetic body on the magnetic field and the magnetic flux density.

According to a further embodiment of the sintered magnetic body, a largest diameter of the focal area in the cross-sectional plane is smaller than a width or a height of the sintered magnetic body in the cross-sectional plane, preferably smaller than 0.7 times that value and more preferred smaller than 0.5 times that value.

For example, the focal area is of a circular or spherical shape and has a width of 0.5 cm, whereas the sintered magnetic body has a width of 4 cm and a height of 2 cm and a rectangular cross-section in the cross-sectional plane.

In an ideal sintered body all preferred axes of magnetizations of the grains forming the sintered body converge in a single focal point. However, the envisaged effect of having a focussed magnetic field can also be achieved to a reasonable extent when only a majority of grains are oriented and when the focal point is smeared into a focal area having a certain spatial extension.

Any embodiment of the first aspect may be combined with any other embodiment of the first aspect to obtain another embodiment of the first aspect.

According to a second aspect, a method for manufacturing a sintered magnetic body is suggested.

In a first step, a powder comprising grains of a magnetic material is provided. Each grain has a preferred axis of magnetization.

In a second step, a precursor body is formed with the powder.

In a third step, the preferred axis of magnetization of each grain in the precursor body is oriented by applying an external magnetic field to the formed precursor body. The magnetic momentum of each grain interacts with the external magnetic field, leading to a torque acting on the grain such that the grain turns and aligns its preferred axis of magnetization parallel to the external magnetic field. The external magnetic field has a focussed pattern such that in a cross-sectional plane of the precursor body a majority of said grains orient such that the preferred axis of magnetization of each grain of the majority is pointing to a focal area outside of the precursor body.

In a fourth step, the precursor body with the oriented grains is compressed while still being in the external magnetic field.

In a last step, the compressed precursor body with the oriented grains is sintered.

This method is suitable, in particular, to produce a sintered magnetic body according to the first aspect. Although being formulated in an ordered protocol, the order of the individual steps can be varied and/or various steps can take place simultaneously.

The method is in particular effective to obtain a sintered magnetic body whose grains are oriented in a preferred fashion that can be used to enhance a magnetic flux density outside of the sintered magnetic body. It may also be said that the grains of the sintered magnetic body are pre-oriented with their preferred axis of magnetization. By such preorientation magnetizing the sintered magnetic body to obtain a magnet is enhanced can yield magnets with a favourable magnetization pattern, magnetic field properties and enhanced magnetic field strength.

According to an embodiment, the method further comprises a step of slitting a surface of the sintered magnetic body. Alternatively or additionally, the sintered magnetic body is fully segmented into a number of segments, and the segments are then reassembled.

This embodiment is particularly useful to suppress or reduce eddy currents that may be induced in the sintered magnetic body or a magnet that was obtained from the sintered magnetic body when it is exposed to a temporal changing magnetic flux. Specifically, magnets employed in electrical generators or electrical motors need to be cooled due to heat generation that is partially due to such eddy current losses. By introducing barriers for the eddy currents, the resistance to these currents increases and the heat generated will decrease.

For example, by inserting slits into the surface of the sintered magnetic body, an electric path for the eddy currents is increased, thus increasing a resistance for the current. For example, the slits are reaching a depth of 1 cm into the sintered magnetic body, when the sintered magnetic body has a height of 2 cm.

Segmenting the sintered magnetic body means to cut the sintered magnetic body into several segments. The segments are then reassembled, in particular in the same arrangement as they were cut, for example on a carrier structure. By this, an electric conducting path between the segments is interrupted, such that eddy currents cannot flow between the segments.

According to a further embodiment, the method further comprises a step of magnetizing the sintered magnetic body having oriented grains by applying a magnetizing magnetic field having a pattern such that a magnetic field vector of the magnetizing magnetic field is oriented parallel to the preferred axis of magnetization of the grains. Further, the magnetic field strength is preferably larger than a predetermined value, i.e. larger than 0.5 T, more preferred larger than 1.5 T.

In another embodiment, the sintered magnetic body may be magnetized in a conventional anisotropic magnetic field having a parallel magnetization pattern, as provided by a solenoidal coil. The oriented grains of the sintered magnetic body will keep their orientation in such field, such that the resulting magnet will still have a focussed magnetic field pattern.

A magnet having a strong and stable magnetic field can be produced. A stable magnetic field means that the magnet is not easily demagnetized by other magnetic fields that have a different magnetization pattern.

In an embodiment, the method further comprises a step of cutting the sintered magnetic body into a predetermined shape in dependence of the magnetic field of the sintered magnetic body.

This includes other ablative processes such as sawing, grinding, milling, spark or wire erosion or the like, to obtain a magnet having a desired shape and magnetic field properties.

The embodiments and features described with reference to the sintered magnetic body according to the first aspect apply mutatis mutandis to the method for manufacturing a sintered magnetic body according to the second aspect.

According to a third aspect, a magnet produced according to one of the embodiments of the method according to the second aspect is suggested. Hence, a magnetized sintered body produced by a method according to any one of the embodiments describes above or below is presented.

The magnetic field distribution of this magnet is similar to that of the sintered magnetic body according to first aspect, but can be much stronger due to magnetization. In particular, the magnetic field follows a shaped magnetization pattern and has an increased magnetic field strength on one side of the magnet compared to a parallel magnetized magnet. It can also be said that the magnet has a focussed magnetic pole.

According to a fourth aspect, a surface-mounted permanent-magnet electrical machine is suggested. Magnets of the electrical machine, in particular, comprise magnets according to the third aspect.

A surface mounted permanent magnet electrical machine may be implemented as an electric motor or an electric generator. In such electrical machine, permanent magnets having a permanent magnetic field are employed. Coils are then arranged near the permanent magnets, such that moving a coil relative to a permanent magnet, a changing magnetic flux through the coil is caused.

The magnet is arranged in the permanent magnet electrical machine such that the focal area is on the side of the coils through which the magnetic flux penetrates. For example, the electrical machine has an external rotor and the permanent magnets are mounted on the rotor. Then, the sintered magnetic body is mounted on the rotor such that the focal area is on the side towards the turning axis of the rotor or the stator.

For example, such electrical machines have an air-gap between the rotor and the stator due to mechanical constraints and manufacturing tolerance. By providing the permanent magnet with a focussed magnetization pattern, the magnetic flux density in the air-gap can be increased, for example, compared to an electrical machine having parallel magnetized permanent magnets. This can improve the torque capability and/or efficiency of the electrical machine.

Preferably, all permanent magnets of the electrical machine are magnets according to the third aspect.

According to an embodiment of the surface mounted permanent magnet electrical machine, the radius of a rotor or a stator of the electrical machine is larger than 0.5 m, preferably larger than 1 m and preferably in the range of 1 - 10 m. In embodiments, the magnet or the sintered body does not resemble a radial magnet, a ring magnet or a circular geometry. Preferably, the magnet or body has a flat shape to be placed in an electrical machine.

Electrical machines having such dimensions are implemented for very high power. For example, a generator with such dimension may have an output electric power of more than 1 MW and up to 1000 MW.

According to an embodiment of the surface mounted permanent magnet electrical machine, it is implemented as an electric motor.

Electric motors, especially having a large size, can be employed in particular for propelling larger vessels, such as ocean liners, freighters or cargo ships, and military vessels such as aircraft carriers or submarines. Also railway vehicles or large stationary machines such as cranes can be driven by such electric motor.

According to a further embodiment of the surface mounted permanent magnet electrical machine, it is implemented as an electric generator.

According to a fifth aspect, a wind turbine comprising an electrical machine according to the fourth aspect that is implemented as an electric generator is suggested.

In particular a large wind turbine that can have blades that are longer than 50 m and can produce an output electrical power of over 1 MW can benefit from the improved electrical machine.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic perspective view of a first embodiment of a sintered magnetic body;
Fig. 2 shows a schematic view of a cross-section of a second embodiment of a sintered magnetic body;
Fig. 3 shows a schematic view of a cross-section of a third embodiment of a sintered magnetic body;
Fig. 4A and 4B each show a schematic view of a cross-section of an example of a precursor body;
Fig. 5A and 5B each show a schematic view of a cross-section of an example of a magnetic field distribution;
Fig. 6 shows a schematic diagram of an example for a magnetic flux density in an air-gap;
Fig. 7 shows a schematic view of an embodiment of an electrical machine;
Fig. 8 shows a schematic view of a detail of an embodiment of an electrical machine;
Fig. 9 shows another schematic view of a detail of an embodiment of an electrical machine;
Fig. 10 shows a schematic view of an embodiment of a wind turbine; and
Fig. 11 shows a schematic block diagram of an embodiment of a method for manufacturing a sintered magnetic body.

In the Figures, like reference numerals designate like or functionally equivalent elements, unless otherwise indicated.

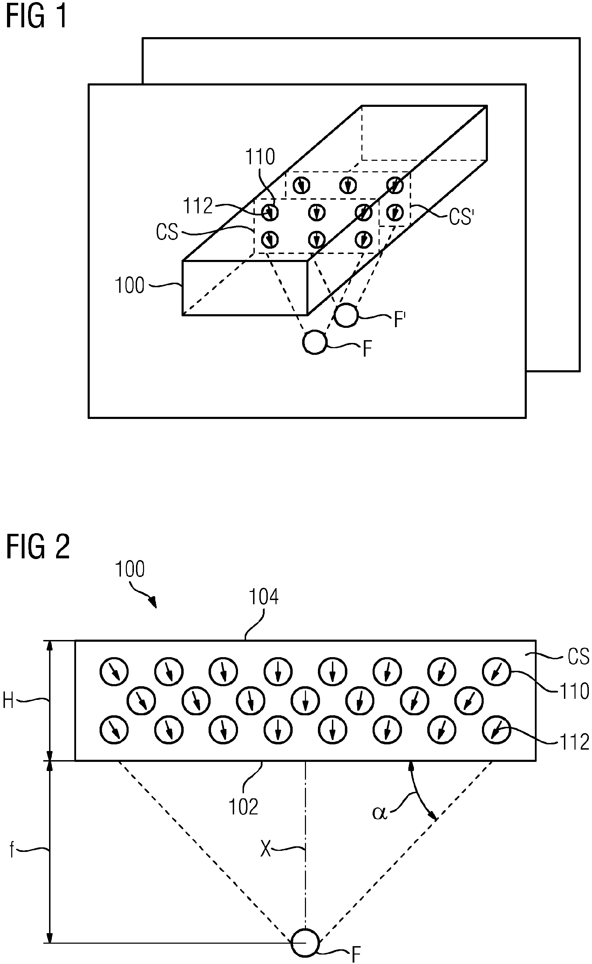

Fig. 1 shows a schematic perspective view of a first embodiment of a sintered magnetic body 100. The sintered magnetic body 100 in this embodiment has an elongated cuboidal shape. Two cross-sectional planes CS, CS' of the sintered magnetic body 100 are shown in Fig. 1, which are parallel to a front face and a back face of the sintered magnetic body 100. In each of the cross-sectional planes CS, CS' of the sintered magnetic body 100 a number of grains 110 are drawn, each of the grains 110 having a preferred axis of magnetization 112 drawn as an arrow. Without limiting the generality, six grains 110 are shown in cross-sectional plane CS and four grains 110 are shown in cross-sectional plane CS'. Embodiments for magnets or sintered bodies can comprise several ten-thousands of grains along a straight path through the plane.

The grains 110 in cross-sectional plane CS are oriented such that the preferred axis of magnetization 112 of each of the grains 110 is pointing to a focal area F that is arranged outside of the sintered magnetic body 100 and lies in the same plane as the cross-sectional plane CS. The grains 110 in cross-sectional plane CS' are oriented such that the preferred axis of magnetization of each of the grains 110 is pointing to a focal area F' outside the sintered magnetic body 100, that lies in the same plane as the cross-sectional plane CS'. Thus, the focal area F, F' of grains 110 in different cross-sectional planes CS, CS' are different. Focal areas F and F' may be connected by a line which is parallel to both the top and sides of the sintered magnetic body 100 (not shown). The orientation of the grains 110 will be explained with more detail corresponding with Fig. 2 below.

For example, the focal area F, F' in this embodiment has a circular shape with a diameter of 0.5 cm, and the elongated cuboidal shaped sintered magnetic body 100 has length of 6 to 20 cm, a width of 5 to 15 cm and a height of 1 to 2.5 cm. Preferably, the focal area F, F' of the sintered magnetic body 100 is very small, ideally collapsing to a focal point. Due to manufacturing tolerance and/or local effects, the focal area will have certain finite dimensions.

Fig. 2 shows a schematic view of a cross-sectional plane CS of an embodiment of a sintered magnetic body 100, for example the first embodiment shown in Fig. 1. The sintered magnetic body 100 in this embodiment has a rectangular cross-sectional shape with a first surface 102 and a second surface 104 facing each other. For example, the sintered magnetic body 100 has a height or thickness H of 1 to 2.5 cm which separates the first surface 102 and the second surface 104.

The grains 110 that are arranged in the cross-sectional plane CS each have a preferred axis of magnetization 112. In this example, the grains 110 are all oriented such that the preferred axis of magnetization 112 of each grain 110 is pointing to a focal area F below the first surface 102. The focal area F is arranged on a symmetry axis X with respect to the cross-sectional plane CS of the sintered magnetic body 100 and at a distance f below the sintered magnetic body 100. Three dashed lines are shown between the first surface 102 and the focal area F. The middle dashed-line is a symmetry axis X for the sintered magnetic body 100. The two outer dashed lines represent a minimum angle α between the first surface 102 and the preferred axis of magnetization 112 of a grain 110 close to an edge of the sintered magnetic body 100.

For example, the minimum angle α has a value of 45°. In embodiments, the minimum angle α can be as small as 10°, or even smaller.

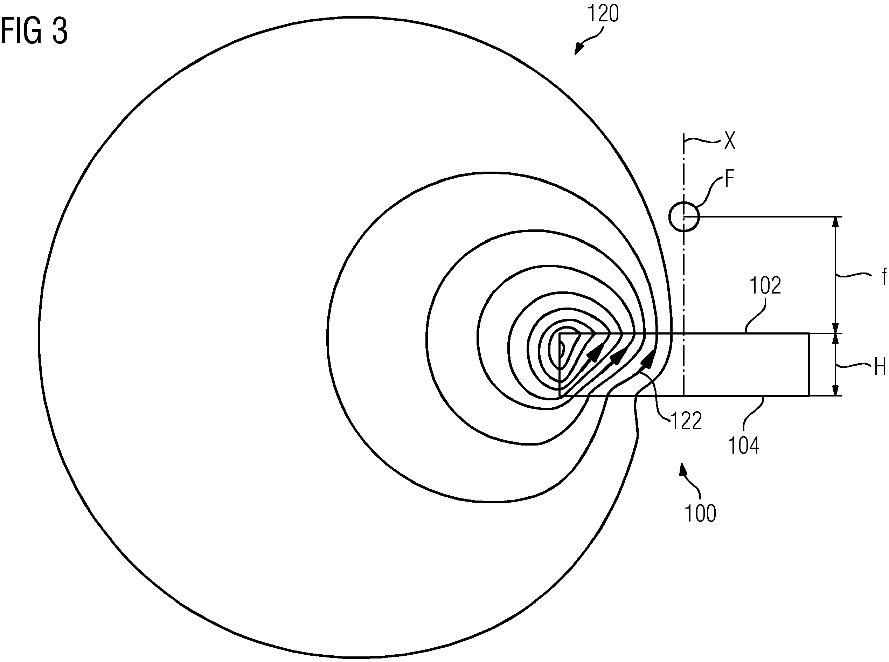

Fig. 3 shows a schematic view of a cross-section of an embodiment of a sintered magnetic body 100, for example the sintered magnetic body 100 shown Fig. 1 and Fig. 2.

In particular, Fig. 3 shows a magnetic field 120 generated by the sintered magnetic body 100. The magnetic field 120 is represented by a number of magnetic field lines that form closed loops. Further, there are magnetic field vectors 122 shown in the sintered magnetic body 100. Only one of the magnetic field vectors 122 is marked by a reference sign. For better clarity, the magnetic field 120 is only drawn for the left half of the sintered magnetic body 100. The magnetic field 120 for the right half of the sintered magnetic body 100 can be obtained by mirroring at the central axis X.

The density of the magnetic field lines corresponds to a magnetic field strength at a given position. The magnetic field lines of the magnetic body 100 converge towards the focal area F outside of the magnetic body 100 on the first side 102 of the magnetic body 100 at a distance f. The magnetic field vectors 122 point to the focal area F. This results in both an increased magnetic field strength at the first surface 102 as compared with a magnetic field strength at the second surface 104, as well as an increased magnetic flux density B in the region between the first surface 102 and the focal area F. An increased magnetic flux density B in a certain volume increases the magnetic flux through a cross-sectional area of that volume perpendicular to the magnetic field vector (not shown).

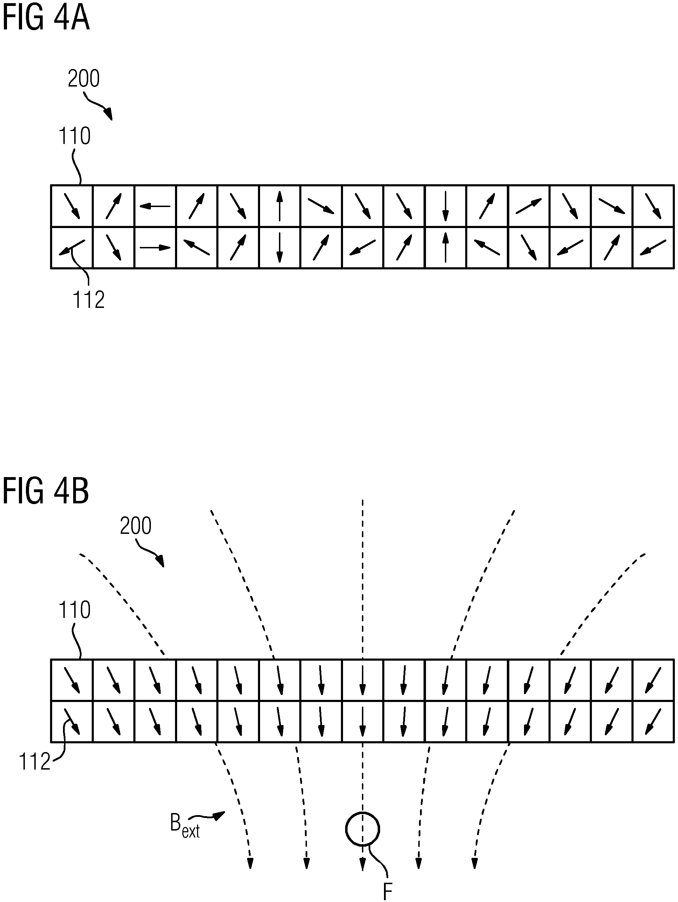

Fig. 4A and 4B each show a schematic view of a cross-sectional plane of an example of a precursor body 200 in two different states. The precursor body 200 is represented by a number of square grains 110 of a magnetic material, each of the grains 110 having a preferred axis of magnetization 112 which is shown by an arrow corresponding to each of the grains 110.

Fig. 4A shows a situation when the precursor body 200 was just formed. The preferred axis of magnetisation 112 of the grains 110 is randomly distributed. There is essentially no correlation between the preferred axis of magnetization 112 of two different grains 110.

Fig. 4B shows the orienting effect of an external magnetic field Bₑₓₜ. The external magnetic field Bₑₓₜ is generated by an arrangement of coils, for example (not shown), and is represented by a number of magnetic field lines. The external magnetic field Bₑₓₜ is generated in such a way that magnetic field vectors in the cross-sectional plane of the precursor body 200 are pointing to a focal area F outside of the precursor body 200. The external magnetic field Bₑₓₜ and magnetic moments of the grains 110 interact, leading to a turning moment acting on the grains 110. The grains 110 are still loose in the precursor body 200 and grains 110 may actually rotate such that the preferred axis of magnetization 112 of grains 110 is oriented along the magnetic field vector of the external magnetic field Bₑₓₜ. Of course, a respective grain 110 will orient according to the local magnetic field vector at the position of the respective grain 110. This process of orienting the grains 110 according to the external magnetic field Bₑₓₜ can be called aligning or pre-aligning the grains 110 in the precursor body 200.

Pre-aligning the grains 110 in this way and then sintering the precursor body 200 to obtain a sintered magnetic body 100 (see Figs. 1 - 3) facilitates a magnet with a predefined magnetization pattern. Preferably, the magnetic field of the sintered magnetic body 100 will have a similar form as the external magnetic field Bₑₓₜ that was applied in the pre-aligning procedure to the precursor body 200.

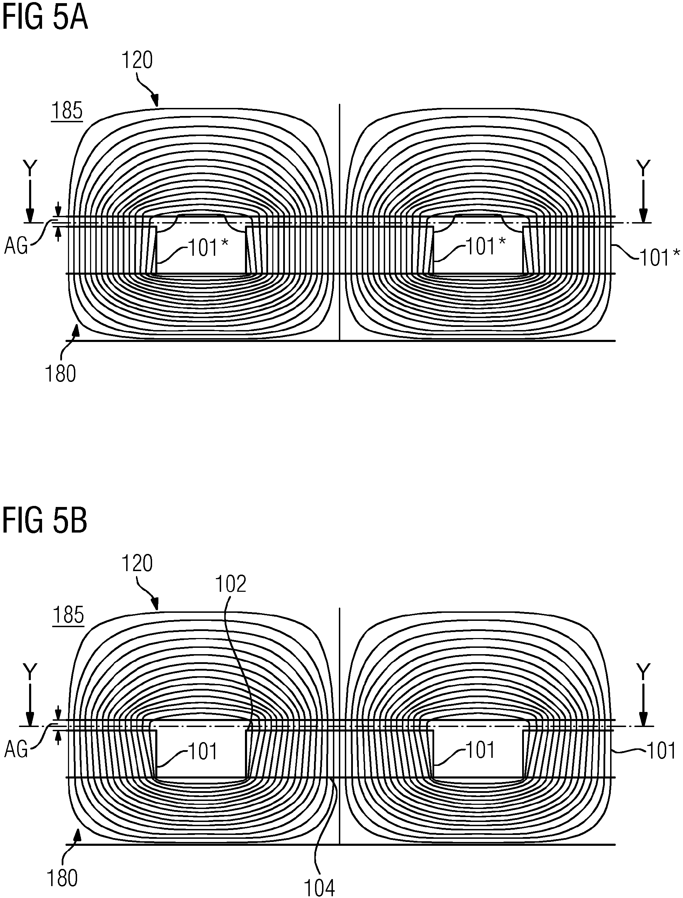

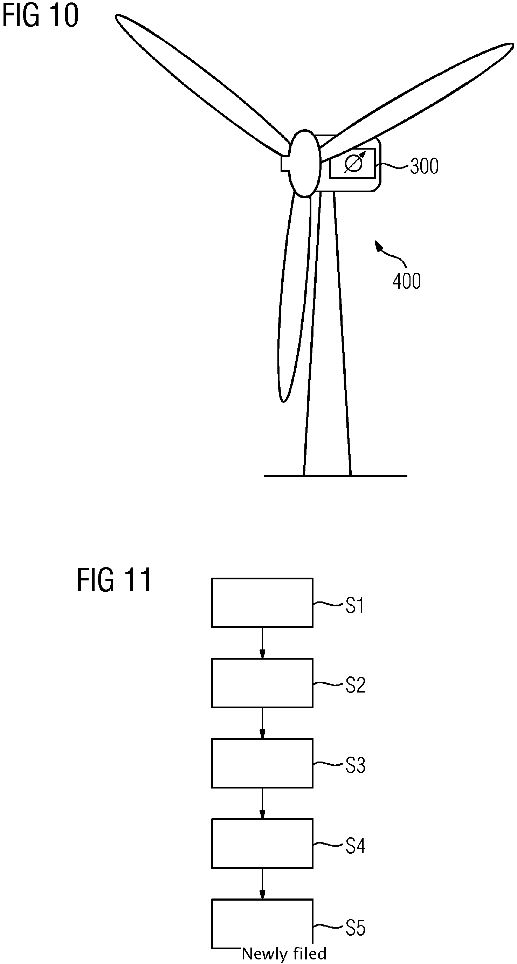

Fig. 5A and 5B each show a schematic view of a cross-section of an example of a magnetic field 120. Fig. 5A shows a magnetic field 120 generated by a magnet 101* having parallel magnetization that is arranged next to two similar magnets 101* (each of which only one half is shown due to the periodicity). Fig. 5B shows a similar plot, but with magnets 101 having a focussed magnetization pattern that were produced according to the method explained corresponding to Fig. 10 with a final magnetization step.

The magnets 101, 101* are arranged and fixed on a magnetizable material 180 and are facing magnetizable material 185. Between the upper surface of the magnets 101, 101* and the magnetizable material 180 there is an air-gap AG having a certain width.

Fig. 5B shows that the magnets 101 with the focussed magnetization pattern are arranged such that the first surface 102, which is facing the focal area F (see Fig. 1 to 3) is directed to the air-gap AG.

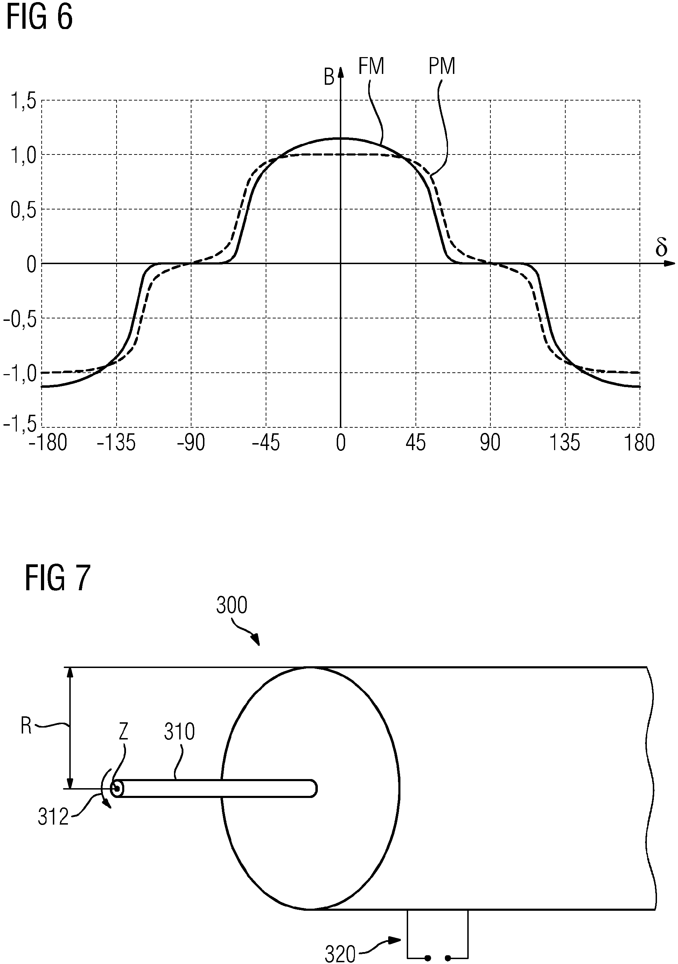

The magnetic field 120 is represented by magnetic field lines, which form closed loops. Here, the magnetic field lines exit from the magnet 101, 101*, cross the air-gap AG, then couple into the magnetic material 185 which guides them laterally. Close to a neighbouring magnet 101, 101*, which is a magnet 101, 101* of the same type but with interchanged polarity, the magnetic field lines exit the magnetizable material 185, cross the air-gap AG, enter the neighbouring magnet 101, 101* and return, through the magnetizable material 180, to their origin in the magnet 101, 101*. Interchanged polarity means that instead of a magnetic north pole a magnetic south pole is facing upward. For the case of the magnets 101 with focussed magnetization pattern, this also means that the focussed pole is interchanged. The difference between the arrangements of Fig. 5A and Fig. 5B are now discussed in connection with Fig. 6.

Fig 6 shows a schematic plot of a magnetic flux density B in the air-gap AG (see Fig. 5A and 5B) along line Y-Y in Fig. 5A and 5B. The plot shows a full electric cycle, denoted by angles δ from -180° to 180°. The values of the magnetic flux density B are normalized on the value obtained for the magnet 101* in a central axis that corresponds to an angle =0°.

The dashed line, denoted as PM for parallel magnetization, corresponds to the arrangement shown in Fig. 5A. The solid line, denoted as FM for focussed magnetization, corresponds to the arrangement shown in Fig. 5B.

The plot shows that the maximum magnetic flux density B in the air-gap AG that can be achieved with the magnets 101 having focussed magnetization pattern is increased to about 115% - 120% of the maximum value achieved with magnets 101* having parallel magnetization pattern. These values correspond to the specific geometry shown in Fig. 5B in combination with specific characteristics of the magnets 101. Using different magnets 101, e.g. having a different pole width and/or focal area position, and/or with a different geometry, the improvement may be different, in particular it may be larger.

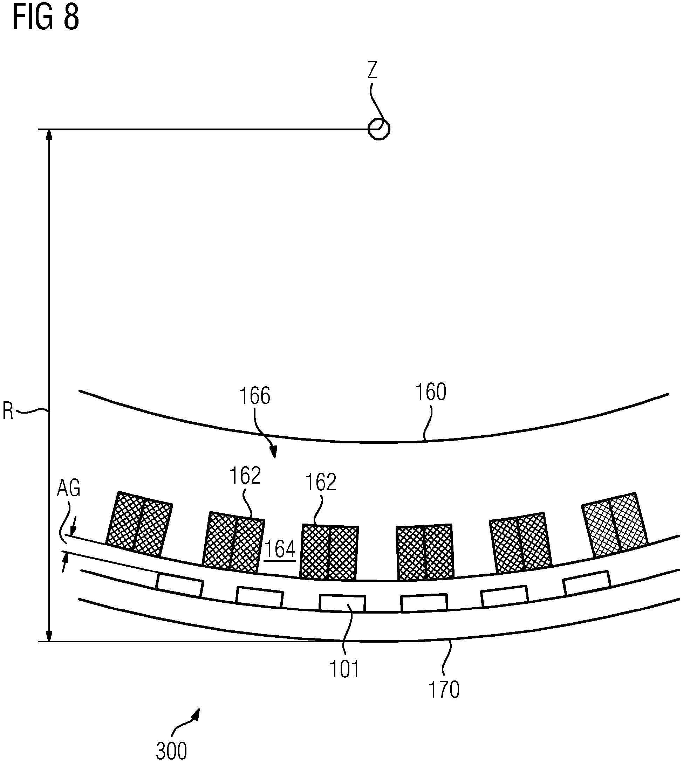

Fig. 7 shows a schematic view of an embodiment of an electrical machine 300. The electrical machine 300 is implemented as an electric generator. The electric generator 300 has a drive shaft 310. By applying a torque 312 to the drive shaft 310 a rotor 170 (see Fig. 8) will rotate about the turning axis Z. The electric generator 300 has a radius R of larger than 1 m. An electrical voltage generated by the electric generator 300 is available at an electric terminal 320, which can provide an electrical current when connected to a load, power electronic controller, grid, or the like (not shown).

Fig. 8 shows a schematic view of a detail of an embodiment of an electrical machine 300, for example the electric generator 300 shown in Fig. 7.

The electric generator 300 has an external rotor 170 with a radius R. On the inside of the rotor 170 magnets 101 having a focussed magnetization pattern (see Fig. 5B) facing towards the rotation axis Z of the rotor 170 are fixed. For clarity, only one magnet 101 is marked with a reference sign. For example, the magnets 101 have a magnetization pattern as is shown schematically in Figs. 1 - 3 for the sintered magnetic body 100 and generate a magnetic field 120 as shown in Fig. 5B.

Radially inside of the rotor 170 with magnets 101 there is a yoke 160. On the outer circumference of the yoke 160 yoke-teeth 164 are formed. Combined with windings 162 wound around the yoke-teeth 164, coils 166 are obtained. For clarity, only one yoke-tooth 164, two windings 162 and one coil 166 are marked with reference signs. Both the rotor 170 and the yoke 160 are preferably made of a magnetizable material.

Between magnets 101 and the surface of the coils 166 there is an air-gap AG. The magnets 101 generate a magnetic flux in the coils 166. In the steady-state, a magnetic field distribution as shown in Fig. 5B may be obtained. By turning the rotor 170 about the axis Z, the magnets 101 pass by the coils 166. Each time a magnet 101 passes a coil 166, the magnetic flux builds up in the respective coil 166, which leads to induction of an electric voltage in the windings 162.

Due to the higher magnetic flux density B that the magnets 101 having the focussed magnetization pattern generate in the air-gap AG compared with magnets 101* having a parallel magnetization pattern (see Figs 5A, 5B and 6), the induced current is higher and the power output of the electric generator 300 can be increased.

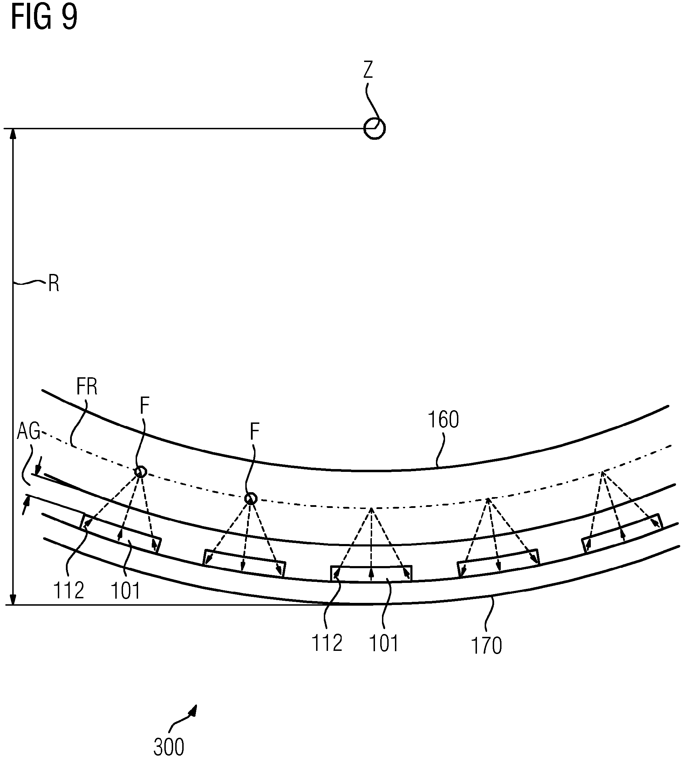

Fig. 9 shows another schematic view of a detail of an embodiment an electrical machine 300, for example the electric generator 300 shown in Fig. 7 and Fig. 8.

The electric generator 300 has an external rotor 170 with a radius R. On the inside of the rotor 170 magnets 101 having a focussed magnetization pattern (see Fig. 5B) facing towards the rotation axis Z of the rotor 170 are fixed. Fig. 9 shows particularly the magnetization pattern of several magnets 101 that are arranged adjacent to each other on the rotor 170. Radially inside of the rotor 170, there is yoke 160. For clarity, no details of the yoke 160 are shown in Fig. 9.

Magnets 101 that are arranged adjacent to each other have a focussed magnetization pattern with interchanged polarity. This is shown in Fig. 9 by the preferred axis of magnetization 112 of the grains 110 of the magnets 101, which are pointing to the inside of the electric generator 300 for the first magnet 101 on the left side of Fig. 9 and which are pointing outside of the electric generator 300 for the adjacent magnet 101. Note that only these first two magnets 101 are denoted with reference signs and that no grains 110 are shown, for clarity reasons.

All magnets 101 have their respective focal area F arranged essentially radially inside the generator 300 from the magnets 101. The focal areas F of the magnets 101 can be described as being arranged on a common radius FR from the rotation axis Z of the rotor 170.

Fig. 10 shows a schematic view of an embodiment of a wind turbine 400 that is equipped with an electric generator 300, for example the electric generator shown in Fig. 7, Fig. 8 or Fig. 9.

The wind turbine 400 is a large turbine and is implemented for an output power in the range of 1 MW - 1000 MW.

Fig. 11 shows a schematic block diagram of an embodiment of a method for manufacturing a sintered magnetic body 100.

In a first step S1, a powder comprising grains 110 (see Fig. 1 - 4) of a magnetic material is provided. Each grain 110 has a preferred axis of magnetization 112.

In a second step S2, a precursor body 200 (see Fig. 4A) is formed with the powder. In this state, the preferred axis of magnetization 112 of the grains 110 are randomly oriented.

In a third step S3, the preferred axis of magnetization 112 of each grain 110 in the precursor body 200 is oriented by applying an external magnetic field Bₑₓₜ to the formed precursor body 200 (see Fig. 4B). The magnetic momentum of each grain 110 interacts with the external magnetic field Bₑₓₜ, leading to a torque acting on the grain 110 such that the grain 110 turns and aligns its preferred axis of magnetization 112 parallel to the external magnetic field Bₑₓₜ. The external magnetic field Bₑₓₜ has a focussed magnetic field pattern such that in a cross-sectional plane of the precursor body 200 a majority of said grains 110 orient such that the preferred axis of magnetization 112 of each grain 110 of the majority is pointing to a focal area F outside of the precursor body 200.

In a fourth step S4, the precursor body with the oriented grains 110 is compressed while still being in the external magnetic field Bₑₓₜ. By pressing the precursor body, the grains 110 are locked in their oriented state, due to frictional forces with adjacent grains 110. Thus, the orientation of the grains 110 is fixed.

In a last step S5, the compressed precursor body with the oriented grains 110 is sintered. By sintering, the orientation of the grains 110 is finally fixed. The sintered magnetic body 100 has an imprinted magnetic pattern.

For example, by applying a magnetizing magnetic field having a magnetic field strength of several Tesla and a magnetic field distribution that corresponds to the magnetic of the sintered magnetic body 100, the imprinted magnetic pattern can be affirmed and the sintered magnetic body 100 having a focussed magnetization pattern can be turned into a magnet 101 with a corresponding focussed magnetization pattern. This magnet 101 exhibits an increased magnetic field strength on the first surface 102 compared to the magnetic field strength on the second surface 104.

In another example, the sintered magnetic body 100 may be magnetized in a conventional anisotropic magnetic field having a parallel magnetization pattern, as provided by a solenoidal coil. The oriented grains 110 of the sintered magnetic body 100 will keep their orientation in such field, such that the resulting magnet will still have a focussed magnetic field pattern.

Although the present invention has been described in accordance with preferred embodiments, it is obvious for the person skilled in the art that modifications are possible in all embodiments.

## Claims

1. A sintered magnetic body (100) comprising grains (110), each grain (110) having a preferred axis of magnetization (112), wherein in at least one cross-sectional plane (CS, CS') of the sintered magnetic body (100) a majority of said grains (110) is oriented such that their preferred axis of magnetization (112) is pointing to a focal area (F, F') outside of the sintered magnetic body (100).

2. The sintered magnetic body according to claim 1,
**characterized in that**
a magnetic field strength of a magnetic field (120) of the sintered magnetic body (100) at a first surface (102) of the sintered magnetic body (100) facing towards the focal area (F, F') is increased in at least a part of the area of the first surface (102) with respect to the magnetic field strength of the magnetic field (120) at a second surface (104) of the sintered magnetic body (100) distal of the focal area (F, F').

3. The sintered magnetic body according to claim 1 or 2,
**characterized in that**
an orientation pattern of grains (110) in a parallel plane (CS') to the cross-sectional plane (CS) is same or similar to the orientation pattern of the grains (110) in the cross-sectional plane (CS).

4. The sintered magnetic body according to any one of claims 1 to 3,
**characterized in that**
an angle (α) between a straight path in the cross-sectional plane (CS, CS') along the first surface (102) and the preferred axis of magnetization (112) of grains (110) is between 0° - 90°, wherein at a center portion of the sintered magnetic body (100) along the straight path the angle (α) is in the range of 80°- 90°.

5. The sintered magnetic body according to any one of claims 1 to 4,
**characterized in that**
an angle between the preferred axis of magnetization (112) of two adjacent grains (110) is larger than 0° and less than 25°.

6. The sintered magnetic body according to any one of claims 1 to 5,
**characterized in that**
the sintered magnetic body (100) has at least one symmetry plane (X).

7. The sintered magnetic body according to any one of claims 1 to 6,
**characterized in that**
the sintered magnetic body (100) has a cuboidal shape, a square frustum shape, or a parallelepiped-shape and a thickness measured from the first surface (102) to the second surface (104) is between 0.5 cm and 4 cm, preferably between 1 cm and 3 cm, and more preferred between 1.5 cm and 2.5 cm.

8. The sintered magnetic body according to any one of claims 1 to 7,
**characterized in that**
the focal area (F, F') is located at a distance (f) of less than 20 cm, preferably less than 10 cm, and more preferred less than 8 cm from the first surface (102).

9. The sintered magnetic body according to any one of claims 1 to 8,
**characterized in that**
a largest diameter of the focal area (F, F') in the cross-sectional plane (SC, SC') is smaller than a width or a height of the sintered magnetic body (100) of the cross-sectional plane (SC, SC'), preferably smaller than 0.7 times that value and more preferred smaller than 0.5 times that value.

10. A method for manufacturing a sintered magnetic body (100), with:
providing (S1) a powder comprising grains (110) of a magnetic material, each grain (110) having a preferred axis of magnetization (112),
forming (S2), with the powder, a precursor body (200),
orienting (S3) the preferred axis of magnetization (112) of the grains (110) in the precursor body (200) by applying an external magnetic field (Bₑₓₜ) to the formed precursor body (200), such that in a cross-sectional plane (SC, SC') of the precursor body (200) a majority of said grains (110) are oriented such that their preferred axis of magnetization (112) is pointing to a focal area (F, F') outside of the precursor body (200),
compressing (S4), in the external magnetic field (Bₑₓₜ), the precursor body (200) with the oriented grains (110), and
sintering (S5) the compressed precursor body (200) with the oriented grains (110).

11. The method according to claim 10, further comprising:
slitting a surface of the sintered magnetic body (100) and/or fully segmenting the sintered magnetic body (100) into a number of segments and reassembling the segments.

12. The method according to claim 10 or 11,
**characterized in that** the method further comprises:
magnetizing the sintered magnetic body (100) having oriented grains (110) by applying a magnetizing magnetic field having a pattern such that a respective magnetic field vector of the magnetizing magnetic field at a grain is oriented parallel to the preferred axis of magnetization (112) of the grain (110) and a magnetic field strength is larger than a predetermined value, preferably at least 1T, throughout the sintered magnetic body (100).

13. The method according to any one of claims 10 to 12,
**characterized in that** the method further comprises:
cutting the sintered magnetic body (100) into a predetermined shape in dependence of the magnetic field (120) of the sintered magnetic body (100).

14. A magnet (101) manufactured according to the method of claim 12 or 13.

15. A surface mounted permanent magnet electrical machine (300), comprising at least one magnet (101) according to claim 14, wherein the magnet (101) is implemented as a rotor and/or stator magnet.

16. The surface mounted permanent magnet electrical machine according to claim 15,
**characterized in that**
the radius (R) of a rotor (170) or a stator of the electrical machine (300) is larger than 0.5 m, preferably larger than 1 m and preferably in the range of 1 - 10 m.

17. A wind turbine (400) comprising an electrical machine (300) according to claim 15 or 16 that is implemented as an electric generator.
